# EUROPEAN PATENT APPLICATION

(11) **EP 4 811 671 A1**
(43) Date of publication of application: **23.09.2026**
(21) Application number: 24899277.8
(22) Date of filing: 23.07.2024
(51) Int. Cl.: H04B 7/00, H04B 17/00, H04L 5/00, H04L 1/00

(54) **METHOD FOR COOPERATIVE COMMUNICATION OF MULTIPLE TRANSMISSION RECEPTION POINTS (TRPS), AND RELATED DEVICE**

(30) Priority: 07.12.2023 CN 202311682564
(71) Applicant: ZTE CORPORATION, Shenzhen, Guangdong 518057 (CN)
(72) Inventor: ZHOU, Jiangyun, Shenzhen, Guangdong 518057 (CN); SONG, Zhikang, Shenzhen, Guangdong 518057 (CN)
(74) Representative: Ziebig Hengelhaupt Intellectual Property Attorneys Patentanwaltskanzlei PartGmbB
(86) International application number: PCT/CN2024/106910
(87) International publication number: WO 2025/118626

(57) **Abstract**

The present application relates to the technical field of communications, and discloses a method for cooperative communication of multiple transmission reception points (TRPs), and a related device. The method is applied to a serving TRP, and comprises: transmitting a plurality of candidate calibration weight groups to a cooperative TRP; transmitting to a target terminal a first channel state information reference signal corresponding to the plurality of candidate calibration weight groups; on the basis of RSRP resource indication information which is fed back by the target terminal on the basis of the first channel state information reference signal, determining a target calibration weight group among the plurality of candidate calibration weight groups; and transmitting the target calibration weight group to the cooperative TRP, such that the cooperative TRP calibrates a second antenna of the cooperative TRP on the basis of the target calibration weight group.

## Description

### CROSS-REFERENCE TO RELATED APPLICATIONS

The present application claims the priority of Chinese Patent Application No. 202311682564.3 filed with the CNIPA on December 7, 2023, and entitled "METHOD FOR COORDINATED COMMUNICATION OF MULTIPLE TRANSMISSION RECEPTION POINTS (TRPS), AND RELATED DEVICE", of which the entire contents are incorporated herein by reference.

### TECHNICAL FIELD

The embodiments of the present application relate to the technical field of communications, in particular to a method for coordinated communication among multiple transmit-receive points (TRPs), and a related device.

### BACKGROUND

A cellular mobile communication system is usually centered around a base station, and each base station only serves its own home subscribers, resulting in interference from multiple neighbor cells in users at the cell edge, and relatively low system performance and user perception.

At present, the main technology for addressing edge user perception is a coordinated multiple points (CoMP) technology. In the CoMP technology, it is no longer a single transmission reception point (TRP) that provides a service to a target terminal; and instead, centering around the target terminal, multiple TRPs together provide services to the same target terminal. For example, the multiple TRPs transmit the same data stream to the same target terminal to enhance the reliability of data transmission.

### SUMMARY

In a first aspect, embodiments of the present application provide a method for coordinated communication among multiple transmit-receive points (TRPs), performed by a serving TRP, and including: transmitting a plurality of candidate calibration weight groups to a cooperative TRP, wherein the plurality of candidate calibration weight groups are used by the cooperative TRP to coordinate with the serving TRP in transmitting to a target terminal first channel state information reference signals corresponding to the plurality of candidate calibration weight groups; transmitting to the target terminal the first channel state information reference signals corresponding to the plurality of candidate calibration weight groups; determining a target calibration weight group from the plurality of candidate calibration weight groups according to RSRP resource indication information which is fed back by the target terminal based on the first channel state information reference signals; and transmitting the target calibration weight group to the cooperative TRP, wherein the target calibration weight group is used by the cooperative TRP to calibrate a second antenna of the cooperative TRP.

In a second aspect, embodiments of the present application provide a method for coordinated communication among multiple transmit-receive points (TRPs), performed by a cooperative TRP, and including: receiving a plurality of candidate calibration weight groups from a serving TRP; transmitting to a target terminal first channel state information reference signals corresponding to the plurality of candidate calibration weight groups; receiving from the serving TRP a target candidate calibration weight group among the plurality of candidate calibration weight groups , wherein the target candidate calibration weight group is determined by the serving TRP according to RSRP resource indication information fed back by the target terminal; and calibrating a second antenna of the cooperative TRP according to the target candidate calibration weight group.

In a third aspect, embodiments of the present application provide a method for coordinated communication among multiple transmit-receive points (TRPs), performed by a target terminal, and including: receiving first channel state information reference signals from a serving TRP and a cooperative TRP, wherein each first channel state information reference signal corresponds to a candidate calibration weight group, and the candidate calibration weight group is any one of a plurality of candidate calibration weight groups; measuring RSRP of resources corresponding to the first channel state information reference signals to determine RSRP resource indication information corresponding to target RSRP from pieces of RSRP; and transmitting the RSRP resource indication information to the serving TRP, wherein the RSRP resource indication information is used by the serving TRP to determine a target calibration weight group from the plurality of candidate calibration weight groups.

In a fourth aspect, embodiments of the present application provide a TRP device, including: a first transmitting module, configured to transmit a plurality of candidate calibration weight groups to a cooperative TRP, wherein the plurality of candidate calibration weight groups are used by the cooperative TRP to coordinate with a serving TRP in transmitting to a target terminal first channel state information reference signals corresponding to the plurality of candidate calibration weight groups; a second transmitting module, configured to transmit to the target terminal the first channel state information reference signals corresponding to the plurality of candidate calibration weight groups; a determining module, configured to determine a target calibration weight group from the plurality of candidate calibration weight groups according to RSRP resource indication information which is fed back by the target terminal based on the first channel state information reference signals; and a third transmitting module, configured to transmit the target calibration weight group to the cooperative TRP, wherein the target calibration weight group is used by the cooperative TRP to calibrate a second antenna of the cooperative TRP.

In a fifth aspect, embodiments of the present application provide a TRP device, including: a first transceiving module, configured to receive a plurality of candidate calibration weight groups from a serving TRP; transmit to a target terminal first channel state information reference signals corresponding to the plurality of candidate calibration weight groups; and receive from the serving TRPa target candidate calibration weight group among the plurality of candidate calibration weight groups , wherein the target candidate calibration weight group is determined by the serving TRP according to RSRP resource indication information fed back by the target terminal; and a calibrating module, configured to calibrate a second antenna of the cooperative TRP according to the target candidate calibration weight group.

In a sixth aspect, embodiments of the present application provide a terminal, including: a second transceiving module, configured to receive first channel state information reference signals from a serving TRP and a cooperative TRP, wherein each first channel state information reference signal corresponds to a candidate calibration weight group, and the candidate calibration weight group is any one of a plurality of candidate calibration weight groups; and transmit RSRP resource indication information to the serving TRP, wherein the RSRP resource indication information is used by the serving TRP to determine a target calibration weight group from the plurality of candidate calibration weight group; and a measuring module, configured to measure RSRP of resources corresponding to the first channel state information reference signals to determine the RSRP resource indication information corresponding to target RSRP from pieces of RSRP.

In a seventh aspect, embodiments of the present application provide an electronic device, including a processor and a memory. The memory stores a program or an instruction runnable on the processor, and the program or the instruction, when executed by the processor, implements the steps of the method as described in the first aspect or the second aspect or the third aspect above.

In an eighth aspect, embodiments of the present application provide a readable storage medium. The readable storage medium stores a program or an instruction thereon, and the program or the instruction, when executed by a processor, implements the steps of the method as described in the first aspect or the second aspect or the third aspect above.

### BRIEF DESCRIPTION OF DRAWING(S)

Accompanying drawings here, which are incorporated in and constitute a part of the specification, illustrate embodiments consistent with the present application and together with the specification, serve to explain the principles of the present application.
FIG. 1 shows a schematic flowchart of a method for coordinated communication among multiple transmit-receive points (TRPs) provided by embodiments of the present application.
FIG. 2 shows a schematic scenario diagram of coordinated communication of multiple TRPs provided by embodiments of the present application.
FIG. 3 shows a schematic calibration diagram of a second antenna of a cooperative TRP provided by embodiments of the present application.
FIG. 4 shows a schematic diagram of coherent shaping transmission provided by embodiments of the present application.
FIG. 5 shows a schematic flowchart of another method for coordinated communication among multiple transmit-receive points (TRPs) provided by embodiments of the present application.
FIG. 6 shows a schematic flowchart of yet another method for coordinated communication among multiple transmit-receive points (TRPs) provided by embodiments of the present application.
FIG. 7 shows a schematic structural diagram of a TRP device provided by embodiments of the present application.
FIG. 8 shows a schematic structural diagram of another TRP device provided by embodiments of the present application.
FIG. 9 shows a schematic structural diagram of a terminal provided by embodiments of the present application.
FIG. 10 shows a schematic structural diagram of a system for coordinated communication among multiple transmit-receive points (TRPs) provided by embodiments of the present application.
FIG. 11 shows a schematic structural diagram of an electronic device provided by embodiments of the present application.

### DETAILED DESCRIPTION

Exemplary embodiments will be illustrated in detail here, examples of which are represented in accompanying drawings. When the following descriptions refer to the accompanying drawings, the same number in the different accompanying drawings represents the same or similar elements unless otherwise indicated. The implementations described in the following exemplary embodiments do not represent all implementations consistent with the present application. On the contrary, they are merely examples of an apparatus and method consistent with some aspects of the present application as detailed in the appended claims.

In wireless communications, a coordinated multiple points (CoMP) technology may be used to improve the quality of service for edge users of a cell and increase cell edge throughput through joint scheduling of interactive measurement and data information between neighbor cells. In the CoMP technology, a plurality of TRPs (such as a serving TRP and a cooperative TRP) jointly provide services to the same target terminal. A TRP corresponding to a serving cell where the target terminal is located is referred to as the serving TRP, while a TRP other than the serving TRP that also provides the service to the target terminal is referred to as the cooperative TRP. When the target terminal is at the cell edge, the serving TRP and the cooperative TRP both transmit downlink data to the target terminal, to improve the signal quality of the target terminal at the cell edge.

However, distances between different TRPs and the target terminal vary, and there may be a time delay or phase deviation between signals transmitted by the serving TRP and the cooperative TRP, resulting in an unsatisfactory performance gain effect of coordinated communication of the multiple TRPs.

For the above-mentioned problems existing in the coordinated communication process among the multiple transmit-receive points (TRPs), embodiments of the present application provide a method for coordinated communication among multiple transmit-receive points (TRPs). A serving TRP and a cooperative TRP jointly transmit first channel state information reference signals to a target terminal. The serving TRP selects, from a plurality of candidate calibration weight groups, a target calibration weight group that better matches downlink channel quality of the target terminal according to RSRP resource indication information fed back by the target terminal. Then, the cooperative TRP calibrates a second antenna according to the target calibration weight group, so as to reduce the impact of the time delay or phase deviation between signals transmitted by the cooperative TRP and the serving TRP on the downlink channel quality of the target terminal, thereby improving the performance gain effect of coordinated communication of the multiple TRPs.

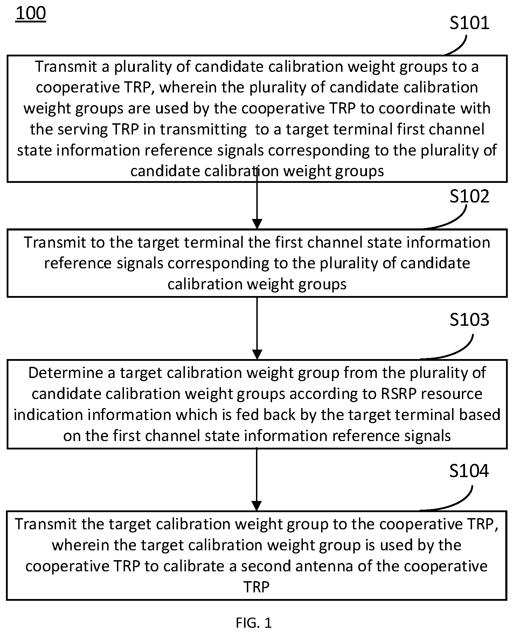

Referring to FIG. 1, FIG. 1 shows a schematic flowchart of a method for coordinated communication among multiple transmit-receive points (TRPs) provided by embodiments of the present application. The method 100 is performed by a serving TRP, and may include the following steps.

At S101, a plurality of candidate calibration weight groups are transmitted to a cooperative TRP, wherein the plurality of candidate calibration weight groups are used by the cooperative TRP to coordinate with the serving TRP in transmitting to a target terminal first channel state information reference signals corresponding to the plurality of candidate calibration weight groups.

At S102, the first channel state information reference signals corresponding to the plurality of candidate calibration weight groups are transmitted to the target terminal.

At S103, a target calibration weight group is determined from the plurality of candidate calibration weight groups according to RSRP resource indication information which is fed back by the target terminal based on the first channel state information reference signals.

At S104, the target calibration weight group is transmitted to the cooperative TRP, wherein the target calibration weight group is used by the cooperative TRP to calibrate a second antenna of the cooperative TRP.

In the embodiment of the present application, the serving TRP and the cooperative TRP may be distributed in base stations of the same cell, may be distributed in the same base station of different cells, or may be distributed in different base stations of different cells. In S101 above, the manner in which the serving TRP transmits the plurality of candidate calibration weight groups to the cooperative TRP may include the following cases.

In one possible case, when the serving TRP and the cooperative TRP belong to the same cell, the plurality of candidate calibration weight groups may be transmitted via an air interface between the serving TRP and the cooperative TRP.

In one possible case, when the serving TRP belongs to a cell 1, the cooperative TRP belongs to a cell 2, and the cell 1 and the cell 2 belong to the same base station, the serving TRP and the cooperative TRP may transmit the plurality of candidate calibration weight groups via an interface (e.g., an Xn interface) between the cell 1 and the cell 2.

In another possible case, when the serving TRP belongs to a cell 1, the cooperative TRP belongs to a cell 2, the cell 1 belongs to a base station 1, and the cell 2 belongs to a base station 2, the serving TRP and the cooperative TRP may transmit the plurality of candidate calibration weight groups via an interface between the base station 1 and the base station 2.

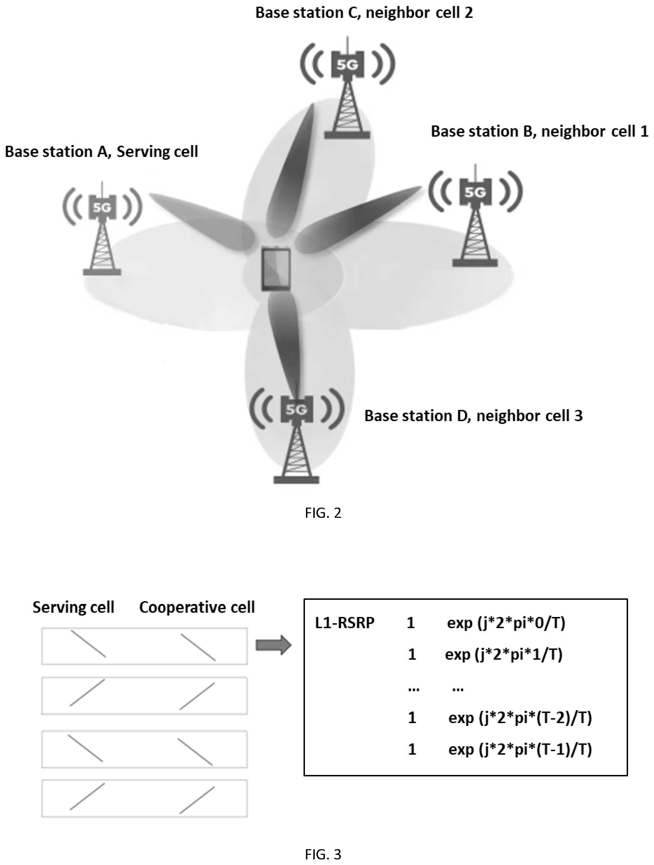

Taking an example where the serving TRP and the cooperative TRP are distributed in different base stations of different cells, as shown in FIG. 2, the serving TRP is distributed in a base station A of a serving cell, and the cooperative TRPs may be distributed in a base station B of a neighbor cell 1, a base station C of a neighbor cell 2, and a base station D of a neighbor cell 3. The serving TRP and the cooperative TRPs may transmit a plurality of candidate calibration weight groups via an interface between the base stations.

In a possible implementation, the base station A of the serving cell may select a cooperative cell according to an A3 measurement report reported by the target terminal. In some cases, the base station A of the serving cell acquires the A3 measurement report which is transmitted by the target terminal, and the A3 measurement report includes configuration information of a plurality of neighbor cells corresponding to the serving cell and reference signal receiving power (RSRP) of each neighbor cell. According to the A3 measurement report, a neighbor cell, whose configuration information and RSRP strength satisfy a preset condition, is selected from the plurality of neighbor cells as the cooperative cell, and a TRP corresponding to the selected cooperative cell serves as the cooperative TRP. The preset condition may be taking a neighbor cell whose configuration information is the same as that of the serving cell and whose RSRP strength exceeds a preset strength threshold as the cooperative cell, or the preset condition may also be taking a neighbor cell whose configuration information is the same as that of the serving cell and which has the highest RSRP strength among the plurality of neighbor cells as the cooperative cell. Here, the configuration information may be information such as a transceiving mode, a frequency point, a bandwidth, and a time slot resource.

Furthermore, after the cooperative TRP is determined, the serving TRP transmits a plurality of candidate calibration weight groups to the cooperative TRP, such that the cooperative TRP, in coordination with the serving TRP, transmits first channel state information reference signals (CSI-RSs) corresponding to the plurality of candidate calibration weight groups to the target terminal; and the serving TRP transmits the first CSI-RSs corresponding to the plurality of candidate calibration weight groups to the target terminal. In this way, the serving TRP and the cooperative TRP both transmit the first CSI-RSs corresponding to the plurality of candidate calibration weight groups to the same target terminal.

The target terminal receives the plurality of groups of first CSI-RSs transmitted by the serving TRP and the cooperative TRP, and then measures RSRP of resources corresponding to the plurality of groups of first CSI-RSs so as to obtain RSRP resource indication information corresponding to target RSRP among pieces of RSRP, and transmits the RSRP resource indication information to the serving TRP.

The serving TRP determines a target calibration weight group from the plurality of candidate calibration weight groups according to the RSRP resource indication information which is fed back by the target terminal based on the first CSI-RSs. The target calibration weight group is a candidate calibration weight group indicated by the RSRP resource indication information. Then, the target calibration weight group is transmitted to the cooperative TRP, such that the cooperative TRP calibrates a second antenna of the cooperative TRP according to the target calibration weight group.

In this way, the serving TRP can acquire, from the plurality of candidate calibration weight groups, a target calibration weight group that better matches downlink channel quality of the target terminal. Then, the cooperative TRP calibrates the second antenna of the cooperative TRP according to the target calibration weight group, so as to reduce the impact of a time delay or phase deviation between signals transmitted by the cooperative TRP and the serving TRP on the downlink channel quality of the target terminal, thereby improving the performance gain effect of coordinated communication of the multiple TRPs.

In a possible implementation, prior to the above step S101 of transmitting the plurality of candidate calibration weight groups to the cooperative TRP, the method further includes that: first CSI-RS resource configuration information and first CSI feedback configuration information used for RSRP (e.g., layer 1 reference signal receiving power (L1-RSRP)) reporting and matching a capability of the target terminal are transmitted to the target terminal,, wherein the first CSI-RS resource configuration information is used to instruct the target terminal to receive CSI-RS resources, and the first CSI feedback configuration information is used to instruct the target terminal to feed back RSRP resource indication information after measuring the received CSI-RS resources.

In this way, when the serving TRP and the cooperative TRP transmit the first CSI-RSs to the target terminal, the target terminal can measure the RSRP of the resources corresponding to the first CSI-RSs and feedback the RSRP resource indication information to the serving TRP.

The plurality of candidate calibration weight groups include the target calibration weight group. The target calibration weight group is configured to calibrate a time delay or phase deviation between the signals transmitted by the serving TRP and the cooperative TRP. In a specific application, the time delay or phase deviation of the transmitted signals may be converted into a corresponding phase difference of downlink data in a frequency domain. In a possible implementation, the plurality of candidate calibration weight groups above include a second calibration weight.

The second calibration weight is a calibration weight corresponding to the second antenna of the cooperative TRP; wherein the second calibration weight is determined according to a first calibration weight corresponding to a first antenna of the serving TRP and a target phase difference, and the target phase difference is a phase difference of the second antenna relative to the first antenna.

In the embodiment of the present application, the serving TRP first designs T single-port candidate calibration weight groups, where T is a positive integer, and a value of T may be selected according to actual needs. In each candidate calibration weight group, the first calibration weight corresponding to the first antenna of the serving TRP may be set to an initial value, where the initial value is 1 by default. Then, according to the initial value and the target phase difference, the second calibration weight corresponding to the second antenna of the cooperative TRP is determined. Here, the target phase difference is the phase difference of the second antenna relative to the first antenna. The candidate calibration weight group may be represented as $\left[1,exp\left(j\times 2π\times \frac{x}{T}\right)\right]$, where x =0-(T-1). The candidate calibration weight group is used to shape the first antenna of the serving TRP and the second antenna of the cooperative TRP, and the first CSI-RS corresponding to the candidate calibration weight group is transmitted to the target terminal. The target terminal feeds back the RSRP resource indication information (cri-RSRP) based on channel measurement. The target calibration weight group $\left[1,exp\left(j\times 2π\times \frac{cri}{T}\right)\right]$ corresponding to the cri is an alignment phase of the second antenna of the current cooperative TRP relative to the first antenna of the serving TRP.

It should be noted that, in specific application, there may be a plurality of first antennas of the serving TRP and a plurality of second antennas of the cooperative TRP. Assuming that each of the serving TRP and the cooperative TRP has M antennas, it is necessary to poll all the antennas of the serving TRP and the cooperative TRP to obtain the alignment phase. That is, a corresponding target calibration weight group is acquired for each antenna of the cooperative TRP, and the target calibration weight group may be represented as: $\left[\begin{matrix}1 & exp \left(j\times 2π\times \frac{{cri}_{1}}{T}\right) \\ 1 & exp \left(j\times 2π\times \frac{{cri}_{2}}{T}\right) \\ ⋯ & \\ 1 & exp \left(j\times 2π\times \frac{{cri}_{M}}{T}\right)\end{matrix}\right] .$

Exemplarily, as shown in FIG. 3, taking a single-cell four-antenna scenario as an example, a 1st first antenna of the serving TRP and a 1st second antenna of the cooperative TRP transmit first CSI-RSs corresponding to T candidate calibration weight groups to the target terminal, and determine an alignment phase of the 1st second antenna of the cooperative TRP according to the cri-RSRP fed back by the target terminal. A 2nd first antenna of the serving TRP and a 2nd second antenna of the cooperative TRP transmit first CSI-RSs corresponding to T candidate calibration weight groups to the target terminal and determine an alignment phase of the 2nd second antenna of the cooperative TRP according to the cri-RSRP fed back by the target terminal. This process is repeated to poll all the antennas, thereby obtaining the alignment phases for all the second antennas of the cooperative TRP.

Then, the first calibration weight corresponding to each first antenna of the serving TRP is 1, and the second calibration weight corresponding to each second antenna of the cooperative TRP is ${\left[exp\left(j\times 2π\times \frac{{cri}_{1}}{T}\right),exp\left(j\times 2π\times \frac{{cri}_{2}}{T}\right),⋯,exp\left(j\times 2π\times \frac{{cri}_{M}}{T}\right)\right]}^{T}$. The serving TRP may transmit to the cooperative TRP the second calibration weight corresponding to the cooperative TRP in the target calibration weight, so that the cooperative TRP calibrates the second antennas thereof according to the second calibration weight.

In a possible implementation, after the above step S104 of transmitting the target calibration weight group to the cooperative TRP, such that the cooperative TRP calibrates the second antenna of the cooperative TRP according to the target calibration weight group, the method further includes the following.

At S105, a second channel state information reference signal corresponding to a target calibration weight group is transmitted to the target terminal.

At S106, a precoding matrix indicator fed back by the target terminal based on the second channel state information reference signal is received.

At S107, precoding is performed on to-be-transmitted service channel data according to the target calibration weight group and the precoding matrix indicator.

In the embodiment of the present application, after the serving TRP transmits the target calibration weight group to the cooperative TRP, the serving TRP and the cooperative TRP compensate resources corresponding to the CSI-RSs with the target calibration weight group respectively, to obtain the second CSI-RS corresponding to the target calibration weight group, and the second CSI-RS is transmitted to the target terminal.

In specific application, the second CSI-RSs transmitted by the serving TRP and the cooperative TRP are at the same time-frequency position and use the same port and scrambling sequence, so as to ensure that other parameters, except for the target calibration weight group, of the two groups of second CSI-RSs are consistent.

The target terminal measures the resources corresponding to the second CSI-RS and reports an optimal cri-RI-PMI-CQI to the serving TRP, where the cri-RI-PMI-CQI includes the precoding matrix indicator (PMI), and the PMI is an inter-cell coherent shaping weight.

The serving TRP multiplies the target calibration weight group by the precoding matrix indicator (PMI) to obtain a beamforming weight, performs weighting on the to-be-transmitted service channel data according to the beamforming weight, and transmits the weighted service channel data to the target terminal, so as to improve the effectiveness of data transmission.

In a possible implementation, prior to the above step S105 of transmitting to the target terminal the second channel state information reference signal corresponding to the target calibration weight group, the method further includes that: second CSI-RS resource configuration information and second CSI feedback configuration information used for PMI reporting and matching a capability of the target terminal are transmitted to the terminal, wherein the second CSI-RS resource configuration information is used to instruct the target terminal to receive CSI-RS resources, and the second CSI feedback configuration information is used to instruct the target terminal to feed back the precoding matrix indicator (PMI) after measuring the received CSI-RS resources.

In this way, when the serving TRP and the cooperative TRP transmit the second CSI-RS to the target terminal respectively, the target terminal can be made to feed back the precoding matrix indicator after receiving the second CSI-RS and measuring the resources corresponding to the second CSI-RS.

In a possible implementation, after the above step S107 of performing precoding on the to-be-transmitted service channel data according to the target calibration weight group and the precoding matrix indicator, the method further includes that: the precoding matrix indicator and the service channel data are transmitted to the cooperative TRP, such that the cooperative TRP performs precoding on the service channel data according to the target calibration weight group and the precoding matrix indicator.

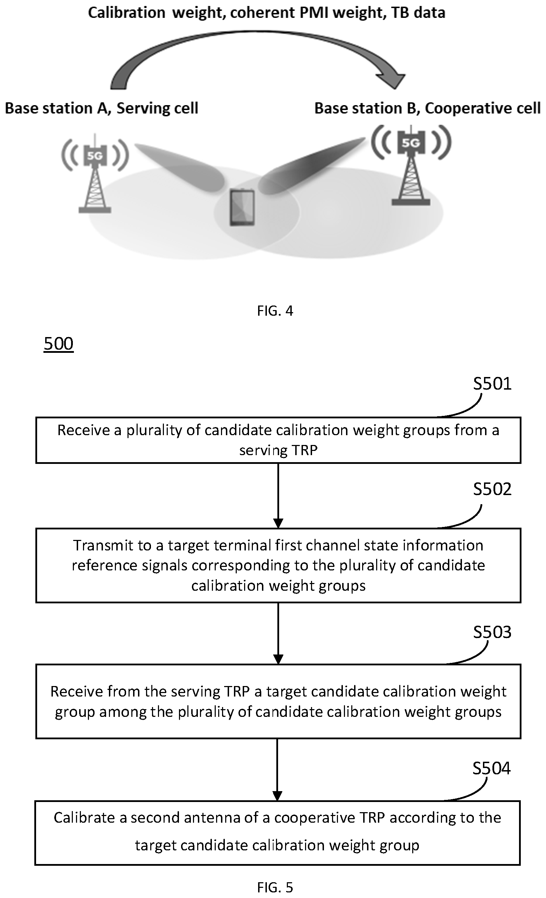

In the embodiments of the present application, as shown in FIG. 4, taking the cooperative TRP distributed in the base station B of the neighbor cell 1 as an example, the base station A transmits the target calibration weight group, the precoding matrix indicator (PMI), and TB data of the to-be-transmitted service channel PDSCH to the base station B, and the cooperative TRP corresponding to the base station B multiplies the target calibration weight group and the PMI to obtain a beamforming weight. Then, weighting is performed on the to-be-transmitted service channel data according to the beamforming weight, and the weighted service channel data is transmitted to the target terminal, which can improve the spectrum efficiency and perception rate of edge users.

Referring to FIG. 5, FIG. 5 shows a schematic flowchart of another method for coordinated communication among multiple transmit-receive points (TRPs) provided by embodiments of the present application. The method 500 is performed by a cooperative TRP, and may include the following steps.

At S501, a plurality of candidate calibration weight groups is received from a serving TRP.

At S502, first channel state information reference signals corresponding to the plurality of candidate calibration weight groups are transmitted to a target terminal.

At S503, a target candidate calibration weight group among the plurality of candidate calibration weight groups is received from the serving TRP, wherein the target candidate calibration weight group is determined by the serving TRP according to RSRP resource indication information fed back by the target terminal.

At S504, a second antenna of the cooperative TRP is calibrated according to the target candidate calibration weight group.

In the embodiments of the present application, the cooperative TRP first receives the plurality of candidate calibration weight groups transmitted by the serving TRP. The candidate calibration weight groups may be represented as $\left[1,exp\left(j\times 2π\times \frac{x}{T}\right)\right]$, where x=0-(T-1). Then, the plurality of candidate calibration weight groups are used to shape the second antenna, and the cooperative TRP transmits the first channel state information reference signals (CSI-RS) corresponding to the candidate calibration weight groups to the target terminal.

The target terminal receives the plurality of groups of first CSI-RSs transmitted by the serving TRP and the cooperative TRP, and then measures RSRP of resources corresponding to the plurality of groups of first CSI-RSs so as to obtain RSRP resource indication information corresponding to target RSRP among pieces of RSRP, and transmits the RSRP resource indication information to the serving TRP.

The cooperative TRP receives from the serving TRP the target candidate calibration weight group among the plurality of candidate calibration weight groups, and calibrates the second antenna of the cooperative TRP according to the target candidate calibration weight group.

In a possible implementation, after the above step S504 of calibrating the second antenna of the cooperative TRP according to the target candidate calibration weight group, the method further includes the following.

At S505, a second channel state information reference signal corresponding to a target calibration weight group is transmitted to the target terminal.

At S506, a precoding matrix indicator and service channel data are received from the serving TRP, wherein the precoding matrix indicator is fed back by the target terminal in response to the received second channel state information reference signal.

At S507, precoding is performed on the service channel data according to the target calibration weight group and the precoding matrix indicator.

In the embodiments of the present application, the cooperative TRP compensates resources corresponding to the CSI-RSs with the target calibration weight group to obtain the second CSI-RS corresponding to the target calibration weight group, and transmits the second CSI-RS to the target terminal.

The target terminal measures the resources corresponding to the second CSI-RS and reports an optimal cri-RI-PMI-CQI to the serving TRP, where the cri-RI-PMI-CQI includes the PMI, and the PMI is an inter-cell coherent shaping weight.

The cooperative TRP receives the precoding matrix indicator and the service channel data transmitted by the serving TRP, and performs precoding on the service channel data according to the target calibration weight group and the precoding matrix indicator. In some cases, the cooperative TRP may multiply the target calibration weight group by the precoding matrix indicator (PMI) to obtain a beamforming weight, perform weighting on the to-be-transmitted service channel data according to the beamforming weight, and transmit the weighted service channel data to the target terminal, so as to improve the effectiveness of data transmission.

In a possible implementation, the above step S505 of transmitting to the target terminal the second channel state information reference signal corresponding to the target calibration weight group includes that: shaping the second antenna of the cooperative TRP according to the target calibration weight group, and transmitting to the target terminal the second channel state information reference signal by the shaped second antenna.

In the embodiments of the present application, the cooperative TRP may shape the second antenna according to the target calibration weight group, and transmit the second CSI-RS to the target terminal by the shaped second antenna, so that the target terminal, according to the second CSI-RSs transmitted by the serving TRP and the cooperative TRP, feeds back an inter-cell coherent shaping weight PMI after measuring the resources corresponding to the second CSI-RS.

In this way, the serving TRP can acquire, from the plurality of candidate calibration weight groups, a target calibration weight group that better matches downlink channel quality of the target terminal, and the cooperative TRP calibrates the second antenna of the cooperative TRP according to the target calibration weight group transmitted by the serving TRP, so as to reduce the impact of a time delay or phase deviation between signals transmitted by the cooperative TRP and the serving TRP on the downlink channel quality of the target terminal, thereby improving the performance gain effect of coordinated communication of the multiple TRPs.

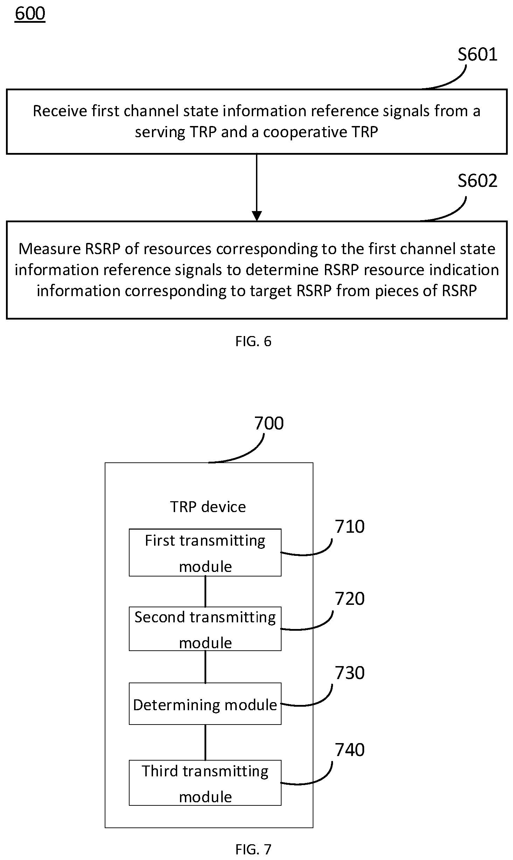

Referring to FIG. 6, FIG. 6 shows a schematic flowchart of yet another method for coordinated communication among multiple transmit-receive points (TRPs) provided by embodiments of the present application. The method 600 is performed by a target terminal, and may include the following steps.

At S601, first channel state information reference signals are received from a serving TRP and a cooperative TRP, wherein each first channel state information reference signal corresponds to a candidate calibration weight group, and the candidate calibration weight group is any one of a plurality of candidate calibration weight groups.

At S602, RSRP of resources corresponding to the first channel state information reference signals are measured to determine RSRP resource indication information corresponding to target RSRP among the pieces of RSRP; and the RSRP resource indication information is transmitted to the serving TRP, wherein the RSRP resource indication information is used by the serving TRP to determine a target calibration weight group from the plurality of candidate calibration weight groups.

In the embodiment of the present application, the target terminal receives the first CSI-RSs transmitted by the serving TRP and the cooperative TRP, measures the RSRP of the resources corresponding to the first CSI-RSs so as to determine the RSRP resource indication information corresponding to the target RSRP from the pieces of RSRP, and transmits the RSRP resource indication information to the serving TRP. Here, by measurement, the target terminal may determine a first CSI-RS with the highest RSRP among the RSRP of the resources corresponding to the first CSI-RSs, and feedback to the cooperative TRP the RSRP resource indication information corresponding to the first CSI-RS with the highest RSRP .

In a possible implementation, prior to the above step 5601 of receiving the plurality of groups of first channel state information reference signals transmitted by the serving TRP and the cooperative TRP, the method further includes that: first CSI-RS resource configuration information and first CSI feedback configuration information used for RSRP (e.g., layer 1 reference signal receiving power (L1-RSRP)) reporting are received from the serving TRP, wherein the first CSI-RS resource configuration information is used to instruct the target terminal to receive CSI-RS resources, and the first CSI feedback configuration information is used to instruct the target terminal to feed back RSRP resource indication information after measuring the received CSI-RS resources. Thus, when the target terminal receives the first CSI-RSs transmitted by the serving TRP and the cooperative TRP, the target terminal measures the RSRP of the resources corresponding to the first CSI-RSs and feeds back the RSRP resource indication information to the serving TRP.

In this way, the target calibration weight group for calibrating the second antenna of the cooperative TRP is selected from the plurality of candidate calibration weight groups by means of the RSRP resource indication information fed back by the target terminal, without calibrating the second antenna of the cooperative TRP through a hardware device, thereby reducing hardware costs. Moreover, the serving TRP can acquire, from the plurality of candidate calibration weight groups, a target calibration weight group that better matches downlink channel quality of the target terminal, and then calibrates the second antenna of the cooperative TRP according to the target calibration weight group, so as to reduce the impact of a time delay or phase deviation between signals transmitted by the cooperative TRP and the serving TRP on the downlink channel quality of the target terminal, thereby improving the performance gain effect of coordinated communication of the multiple TRPs.

In a possible implementation, the above method 600 further includes that: second channel state information reference signals are received from the serving TRP and the cooperative TRP; resources corresponding to the second channel state information reference signals are measured to determine a precoding matrix indicator; and the precoding matrix indicator is transmitted to the serving TRP, wherein the precoding matrix indicator is used by the serving TRP to perform precoding on to-be-transmitted service channel data.

In the embodiments of the present application, the target terminal measures the resources corresponding to the second CSI-RSs and reports an optimal cri-RI-PMI-CQI to the serving TRP, where the cri-RI-PMI-CQI includes the PMI, and the PMI is an inter-cell coherent shaping weight.

In a possible implementation, prior to receiving the second channel state information reference signals from the serving TRP and the cooperative TRP mentioned above, the method further includes that: second CSI-RS resource configuration information and second CSI feedback configuration information used for PMI reporting are received from the serving TRP, wherein the second CSI-RS resource configuration information is used to instruct the target terminal to receive CSI-RS resources, and the second CSI feedback configuration information is used to instruct the target terminal to feed back the precoding matrix indicator (PMI) after measuring the received CSI-RS resources. Thus, when the target terminal receives the second CSI-RSs transmitted by the serving TRP and the cooperative TRP, the target terminal feeds back the precoding matrix indicator after measuring the resources corresponding to the second CSI-RSs.

Referring to FIG. 7, FIG. 7 shows a schematic structural diagram of a TRP device provided by embodiments of the present application. The TRP device 700 may implement all or part of the contents in the embodiment shown in FIG. 1. The TRP device 700 includes the following modules.

A first transmitting module 710 is configured to transmit a plurality of candidate calibration weight groups to a cooperative TRP, wherein the plurality of candidate calibration weight groups are used by the cooperative TRP to coordinate with a serving TRP in transmitting to a target terminal first channel state information reference signals corresponding to the plurality of candidate calibration weight groups.

A second transmitting module 720 is configured to transmit to the target terminal the first channel state information reference signals corresponding to the plurality of candidate calibration weight groups.

A determining module 730 is configured to determine a target calibration weight group from the plurality of candidate calibration weight groups according to RSRP resource indication information which is fed back by the target terminal based on the first channel state information reference signals;.

A third transmitting module 740 is configured to transmit the target calibration weight group to the cooperative TRP, wherein the target calibration weight group is used by the cooperative TRP to calibrate a second antenna of the cooperative TRP.

The candidate calibration weight groups include a second calibration weight.

The second calibration weight is a calibration weight corresponding to the second antenna of the cooperative TRP; wherein the second calibration weight is determined according to a first calibration weight corresponding to a first antenna of the serving TRP and a target phase difference, and the target phase difference is a phase difference of the second antenna relative to the first antenna.

In a possible implementation, the above TRP device 700 further includes a fifth transmitting module, configured to transmit a second channel state information reference signal corresponding to a target calibration weight group to the target terminal; a receiving module, configured to receive a precoding matrix indicator fed back by the target terminal based on the second channel state information reference signal; and a first precoding module, configured to perform precoding on to-be-transmitted service channel data according to the target calibration weight group and the precoding matrix indicator.

In a possible implementation, the above TRP device 700 further includes a sixth transmitting module, configured to transmit the precoding matrix indicator and the service channel data to the cooperative TRP, wherein the cooperative TRP performs precoding on the service channel data according to the target calibration weight group and the precoding matrix indicator.

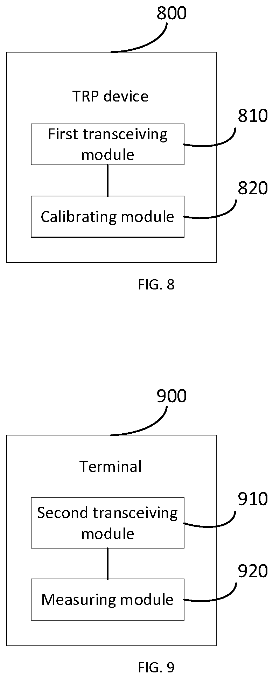

Referring to FIG. 8, FIG. 8 shows a schematic structural diagram of another TRP device provided by embodiments of the present application. The TRP device 800 may implement all or part of the contents in the embodiment shown in FIG. 5. The TRP device 800 includes the following modules.

A first transceiving module 810 is configured to receive a plurality of candidate calibration weight groups from a serving TRP; transmit first channel state information reference signals corresponding to the plurality of candidate calibration weight groups to a target terminal; and receive a target candidate calibration weight group among the plurality of candidate calibration weight groups from the serving TRP, wherein the target candidate calibration weight group is determined by the serving TRP according to RSRP resource indication information fed back by the target terminal.

A calibrating module 820 is configured to calibrate a second antenna of the cooperative TRP according to the target candidate calibration weight group.

In a possible implementation, the above TRP device 800 further includes a third transceiving module, configured to transmit a second channel state information reference signal corresponding to a target calibration weight group to the target terminal; and receive a precoding matrix indicator and service channel data from the serving TRP, wherein the precoding matrix indicator is fed back by the target terminal in response to the received second channel state information reference signal; and a second precoding module, configured to perform precoding on the service channel data according to the target calibration weight group and the precoding matrix indicator.

When the third transceiving module is configured to transmit the second channel state information reference signal corresponding to the target calibration weight group to the target terminal, the third transceiving module is configured to: shape the second antenna of the cooperative TRP according to the plurality of candidate calibration weight groups, and transmit the second channel state information reference signal to the target terminal by the shaped second antenna.

Referring to FIG. 9, FIG. 9 shows a schematic structural diagram of a terminal provided by embodiments of the present application. The terminal 900 may implement all or part of the contents in the embodiment shown in FIG. 6. The terminal 900 includes the following modules.

A second transceiving module 910 is configured to receive first channel state information reference signals from a serving TRP and a cooperative TRP, wherein each first channel state information reference signal corresponds to a candidate calibration weight group, and the candidate calibration weight group is any one of a plurality of candidate calibration weight groups; and transmit RSRP resource indication information to the serving TRP, wherein the RSRP resource indication information is used by the serving TRP to determine a target calibration weight group from the plurality of candidate calibration weight groups.

A measuring module 920 is configured to measure RSRP of resources corresponding to the first channel state information reference signals to determine the RSRP resource indication information corresponding to target RSRP from the plurality of pieces of RSRP.

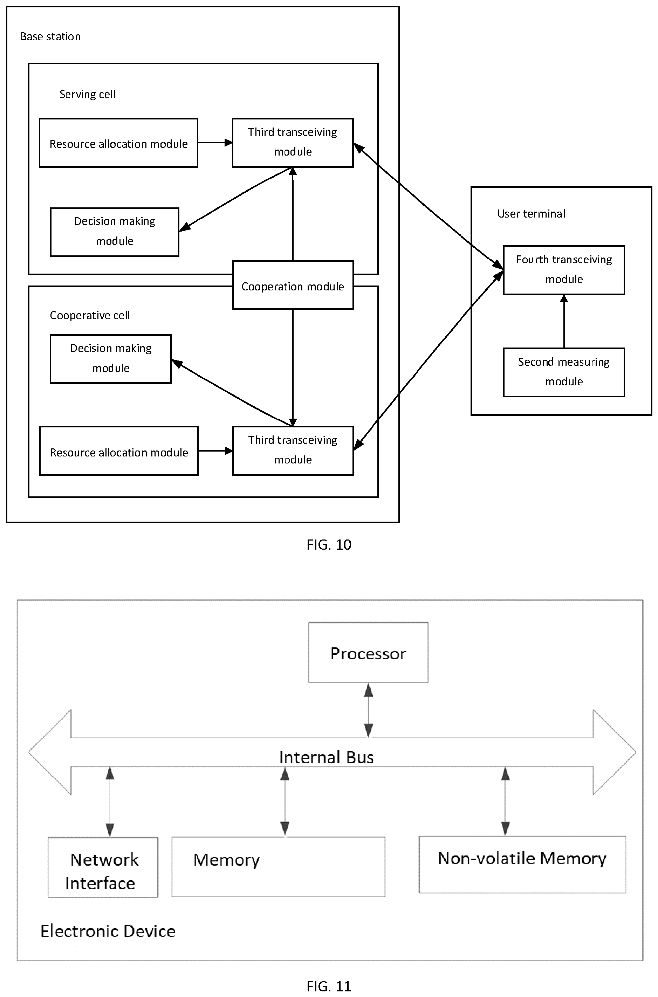

Referring to FIG. 10, FIG. 10 shows a schematic structural diagram of a system for coordinated communication among multiple transmit-receive points (TRPs) provided by embodiments of the present application. The system for coordinated communication among multiple transmit-receive points (TRPs) includes a base station and a user terminal. A serving TRP corresponding to a serving cell and a cooperative TRP corresponding to a cooperative cell are distributed in the base station. The base station is configured to issue, to a terminal, CSI-RS resource configuration and CSI feedback configuration for L1-RSRP reporting and PMI reporting; receive channel measurement feedback cri-RSRP and cri-RI-PMI-CQI from the terminal, acquire an inter-cell target calibration weight group, and perform coherent shaping transmission on service channel data. The terminal is configured to measure a CSI-RS and feed measured CSI back to the base station.

The base station includes a resource allocation module, a third transceiving module, a decision making module, and a cooperation module. The resource allocation module is configured to allocate, to a terminal, CSI-RS resources for L1-RSRP reporting and PMI reporting. The third transceiving module is configured to transmit a CSI signal and downlink service channel data, and receive the channel measurement feedback cri-RSRP and cri-RI-PMI-CQI from the terminal. The decision making module is configured to acquire the inter-cell target calibration weight group according to the cri-RSRP reported by the terminal. The cooperation module is configured to perform coherent shaping on a service channel based on the cri-RI-PMI-CQI reported by the terminal and the target calibration weight group.

The user terminal includes a fourth transceiving module and a second measuring module. The fourth transceiving module is configured to receive CSI-RS measurement and CSI feedback configuration issued by the base station and the downlink service channel data, and transmit the channel measurement cri-RSRP and cri-RI-PMI-CQI to the base station. The second measuring module is configured to measure downlink channel quality.

In this way, the base station can acquire a target calibration weight group that better matches the downlink channel quality of the target terminal, and then calibrates the second antenna of the cooperative TRP according to the target calibration weight group, so as to reduce the impact of a time delay or phase deviation between signals transmitted by the cooperative TRP and the serving TRP on the downlink channel quality of the target terminal, thereby improving the performance gain effect of coordinated communication of the multiple TRPs.

FIG. 11 shows a schematic structural diagram of hardware of an electronic device provided by embodiments of the present application. Referring to the figure, at the hardware level, the electronic device includes a processor, and optionally includes an internal bus, a network interface, and a memory. The memory may include an internal memory such as a high-speed random-access memory (RAM), and may further include a non-volatile memory such as at least one disk memory. Certainly, the electronic device may also include hardware required for other services.

The processor, the network interface, and the memory may be interconnected by the internal bus, which may be an industry standard architecture (ISA) bus, a peripheral component interconnect (PCI) bus, or an extended industry standard architecture (EISA) bus, among others. The bus may be divided into an address bus, a data bus, a control bus, and the like. For ease of illustration, the bus is represented by only one bi-directional arrow in the figure, but it does not indicate only one bus or one type of bus.

The memory stores a program. Specifically, the program may include a program code, and the program code includes computer operating instructions. The memory may include an internal memory and a non-volatile memory, and provides instructions and data to the processor.

The processor reads a corresponding computer program from the non-volatile memory into the internal memory and then runs the computer program to form an apparatus for locating a target user at a logical level. The processor executes the program stored in the memory, specifically performs the method disclosed in the embodiment shown in FIG. 1 or FIG. 5 or FIG. 6, and achieves the functions and beneficial effects of various methods described in the foregoing method embodiments, which is omitted here.

The above method disclosed in the embodiment shown in FIG. 1 or FIG. 5 or FIG. 6 of the present application may be applied to the processor or implemented by the processor. The processor may be an integrated circuit chip having a signal processing capability. During an implementation process, all the steps of the above method may be completed by an integrated logic circuit of hardware or an instruction in the form of software in the processor. The above processor may be a general-purpose processor, including a central processing unit (CPU), a network processor (NP) and the like. The processor may also be a digital signal processor (DSP), an application specific integrated circuit (ASIC), a field-programmable gate array (FPGA) or other programmable logic devices, discrete gate or transistor logic devices, and discrete hardware components. The various methods, steps, and logic block diagrams disclosed in the embodiments of the present application may be implemented or performed. The general-purpose processor may be a microprocessor, or the processor may also be any conventional processor, etc. The steps of the method disclosed in conjunction with the embodiments of the present application may be directly embodied to be executed and completed by a hardware decoding processor, or may be executed and completed through a combination of hardware and software modules in the decoding processor. The software module may be located in a mature storage medium in the art, such as a random access memory, a flash memory, a read-only memory, a programmable read-only memory, an electrically erasable programmable memory, and a register. The storage medium is located in the memory. The processor reads information in the memory and completes the steps of the above method in combination with hardware thereof.

The computer device can also perform the methods described in the foregoing method embodiments, and achieve the functions and beneficial effects of the methods described in the foregoing method embodiments, which is omitted here.

Certainly, in addition to the software implementations, the electronic device of the present application does not exclude other implementations, such as logic devices or combinations of software and hardware, that is, an execution body of the following process flows is not limited to each logic unit, but may be hardware or logic devices.

Embodiments of the present application further proposes a computer-readable storage medium. The computer-readable storage medium stores one or more programs. The one or more programs, when executed by an electronic device including a plurality of applications, cause the electronic device to perform the methods disclosed in the embodiment shown in FIG. 1 or FIG. 5 or FIG. 6 and to achieve the functions and beneficial effects of the methods described in the foregoing method embodiments, which is omitted here.

The computer-readable storage medium includes a read-only memory (ROM), a random access memory (RAM), a magnetic disk or an optical disk, etc.

Further, embodiments of the present application further provide a computer program product. The computer program product includes a computer program stored on a non-transitory computer-readable storage medium, the computer program includes a program instruction, and the program instruction, when executed by a computer, implements the following flow: the method disclosed in the embodiment shown in FIG. 1 or FIG. 5 or FIG. 6, and achieves the functions and beneficial effects of the methods described in the foregoing method embodiments, which is omitted here.

The embodiment of the present application may be applied to various electronic device cooperation or interconnection scenarios, including: cooperation and interconnection between a mobile phone and a laptop computer/tablet computer; cooperation and interconnection between a mobile terminal and a smart television/display; cooperation and interconnection between a mobile phone or a tablet computer and an in-vehicle infotainment system; and cooperation and interconnection between a mobile terminal and a smart conference system, among others. Thus, the diverse needs of users in smart homes, smart offices, smart travel and other scenarios are met.

In total, the above is merely preferred embodiments of the present application and is not intended to limit the protection scope of the present application. Any modification, equivalent replacement, improvement and the like made within the spirit and principle of the present application shall all be contained in the scope of protection of the present application.

The system, apparatus, module or unit illustrated in the above embodiments may be specifically implemented by a computer chip or entity, or by a product having a certain function. A typical implementation device is a computer. In particular, the computer may be, for example, a personal computer, a laptop computer, a cellular phone, a camera phone, a smart phone, a personal digital assistant, a media player, a navigation device, an email device, a game console, a tablet computer, a wearable device, or a combination of any of these devices.

The computer-readable medium includes permanent and non-permanent, and removable and non-removable media, and may achieve information storage through any method or technology. Information can be computer-readable instructions, data structures, modules of programs, or other data. Examples of the storage medium for a computer include, but are not limited to, a phase change memory (PRAM), a static random access memory (SRAM), a dynamic random access memory (DRAM), other types of random access memory (RAM), a read-only memory (ROM), an electrically erasable programmable read-only memory (EEPROM), a flash memory or other memory technologies, a read-only compact disk read-only memory (CD-ROM), a digital versatile disc (DVD) or other optical storage, a magnetic tape cartridge, a magnetic disk storage or other magnetic storage devices, or any other non-transmission medium that can store information accessible by the computing device. According to the definition herein, the computer-readable medium does not include transitory media, such as modulated data signals and carriers.

It should further be noted that, the terms "include", "comprise" or any other variants thereof are intended to cover non-exclusive inclusion, so that a process, method, article or apparatus including a series of elements not only includes those elements, but also includes other elements not clearly listed, or also includes elements inherent to this process, method, article or apparatus. Without further limitations, the elements limited by a statement "including one..." do not exclude the existence of other identical elements in the process, method, commodity or device that includes the said elements.

The various embodiments in this specification are all described in a progressive manner, and the same or similar parts between the various embodiments can be referred to each other. Each embodiment focuses on contents different from other embodiments. In particular, as for the system embodiments, as they are basically similar to the method embodiments, the description is relatively simple. As for related parts, please refer to part of the description in the method embodiments.

## Claims

1. A method for coordinated communication among multiple transmit-receive points called TRPs, performed by a serving TRP, comprising:
transmitting a plurality of candidate calibration weight groups to a cooperative TRP, wherein the plurality of candidate calibration weight groups are used by the cooperative TRP to coordinate with the serving TRP in transmitting to a target terminal first channel state information reference signals corresponding to the plurality of candidate calibration weight groups;
transmitting to the target terminal the first channel state information reference signals corresponding to the plurality of candidate calibration weight groups;
determining a target calibration weight group from the plurality of candidate calibration weight groups according to RSRP resource indication information which is fed back by the target terminal based on the first channel state information reference signals; and
transmitting the target calibration weight group to the cooperative TRP, wherein the target calibration weight group is used by the cooperative TRP to calibrate a second antenna of the cooperative TRP.

2. The method according to claim 1, wherein the candidate calibration weight groups comprise a second calibration weight,
the second calibration weight is a calibration weight corresponding to the second antenna of the cooperative TRP; wherein the second calibration weight is determined according to a first calibration weight corresponding to a first antenna of the serving TRP and a target phase difference, and the target phase difference is a phase difference of the second antenna relative to the first antenna.

3. The method according to claim 1, further comprising:
transmitting to the target terminal a second channel state information reference signal corresponding to the target calibration weight group;
receiving a precoding matrix indicator which is fed back by the target terminal based on the second channel state information reference signal; and
performing precoding on to-be-transmitted service channel data according to the target calibration weight group and the precoding matrix indicator.

4. The method according to claim 3, further comprising:
transmitting the precoding matrix indicator and the service channel data to the cooperative TRP, wherein the service channel data is precoded by the cooperative TRP according to the target calibration weight group and the precoding matrix indicator.

5. A method for coordinated communication among multiple transmit-receive points called TRPs, performed by a cooperative TRP, comprising:
receiving a plurality of candidate calibration weight groups from a serving TRP;
transmitting to a target terminal first channel state information reference signals corresponding to the plurality of candidate calibration weight groups;
receiving from the serving TRP a target candidate calibration weight group among the plurality of candidate calibration weight groups, wherein the target candidate calibration weight group is determined by the serving TRP according to RSRP resource indication information fed back by the target terminal; and
calibrating a second antenna of the cooperative TRP according to the target candidate calibration weight group.

6. The method according to claim 5, further comprising:
transmitting to the target terminal a second channel state information reference signal corresponding to a target calibration weight group;
receiving from the serving TRP a precoding matrix indicator and service channel data , wherein the precoding matrix indicator is fed back by the target terminal in response to the received second channel state information reference signal; and
performing precoding on the service channel data according to the target calibration weight group and the precoding matrix indicator.

7. The method according to claim 6, wherein transmitting to the target terminal the second channel state information reference signal corresponding to the target calibration weight group comprises:
shaping the second antenna of the cooperative TRP according to the target calibration weight group, and transmitting to the target terminal the second channel state information reference signal by a shaped second antenna.

8. A method for coordinated communication among multiple transmit-receive points called TRPs, performed by a target terminal, comprising:
receiving first channel state information reference signals from a serving TRP and a cooperative TRP, wherein each first channel state information reference signal corresponds to a candidate calibration weight group, and the candidate calibration weight group is any one of a plurality of candidate calibration weight groups; and
measuring RSRP of resources corresponding to the first channel state information reference signals to determine RSRP resource indication information corresponding to target RSRP from pieces of RSRP; and transmitting the RSRP resource indication information to the serving TRP, wherein the RSRP resource indication information is used by the serving TRP to determine a target calibration weight group from the plurality of candidate calibration weight groups.

9. The method according to claim 8, further comprising:
receiving second channel state information reference signals from the serving TRP and the cooperative TRP;
measuring resources corresponding to the second channel state information reference signals to determine a precoding matrix indicator; and
transmitting the precoding matrix indicator to the serving TRP, wherein the precoding matrix indicator is used by the serving TRP to perform precoding on to-be-transmitted service channel data.

10. A TRP device , comprising:
a first transmitting module, configured to transmit a plurality of candidate calibration weight groups to a cooperative TRP, wherein the plurality of candidate calibration weight groups are used by a cooperative TRP to coordinate with a serving TRP in transmitting to a target terminal first channel state information reference signals corresponding to the plurality of candidate calibration weight groups;
a second transmitting module, configured to transmit to the target terminal the first channel state information reference signals corresponding to the plurality of candidate calibration weight groups;
a determining module, configured to determine a target calibration weight group from the plurality of candidate calibration weight groups according to RSRP resource indication information which is fed back by the target terminal based on the first channel state information reference signals; and
a third transmitting module, configured to transmit the target calibration weight group to the cooperative TRP, wherein the target calibration weight group is used by the cooperative TRP to calibrate a second antenna of the cooperative TRP.

11. A TRP device, comprising:
a first transceiving module, configured to receive a plurality of candidate calibration weight groups from a serving TRP;
transmit to a target terminal first channel state information reference signals corresponding to the plurality of candidate calibration weight groups; and
receive from the serving TRP a target candidate calibration weight group among the plurality of candidate calibration weight groups, wherein the target candidate calibration weight group is determined by the serving TRP according to RSRP resource indication information fed back by the target terminal; and
a calibrating module, configured to calibrate a second antenna of the cooperative TRP according to the target candidate calibration weight group.

12. A terminal, comprising:
a second transceiving module, configured to receive first channel state information reference signals from a serving TRP and a cooperative TRP, wherein each first channel state information reference signal corresponds to a candidate calibration weight group, and the candidate calibration weight group is any one of a plurality of candidate calibration weight groups; and
transmit RSRP resource indication information to the serving TRP, wherein the RSRP resource indication information is used by the serving TRP to determine a target calibration weight group from the plurality of candidate calibration weight groups; and
a measuring module, configured to measure RSRP of resources corresponding to the first channel state information reference signals to determine the RSRP resource indication information corresponding to target RSRP from pieces of RSRP.

13. An electronic device, comprising a processor and a memory, wherein the memory stores a program or an instruction runnable on the processor, and the program or the instruction, when executed by the processor, implements the steps of the method for coordinated communication among multiple transmit-receive points called TRPs according to any one of claims 1 to 4, or implements the steps of the method for coordinated communication of multiple TRPs according to any one of claims 5 to 7, or implements the steps of the method for coordinated communication of multiple TRPs according to any one of claims 8 to 9.

14. A readable storage medium, storing a program or an instruction thereon, wherein the program or the instruction, when executed by a processor, implements the steps of the method for coordinated communication among multiple transmit-receive points called TRPs according to any one of claims 1 to 4, or implements the steps of the method for coordinated communication of multiple TRPs according to any one of claims 5 to 7, or implements the steps of the method for coordinated communication of multiple TRPs according to any one of claims 8 to 9.
